# EUROPEAN PATENT APPLICATION

(11) **EP 4 585 868 A1**
(43) Date of publication of application: **16.07.2025**
(21) Application number: 23862336.7
(22) Date of filing: 04.09.2023
(51) Int. Cl.: F25B 13/00, F25B 41/20, F25B 41/40, F25B 39/00, F25B 47/02, F16K 11/085

(54) **HEAT PUMP SYSTEM AND FOUR-WAY VALVE**

(30) Priority: 06.09.2022 CN 202211085984
(71) Applicant: York Guangzhou Air Conditioning and Refrigeration Co., Ltd., Qingyuan, Guangdong 511685 (CN); Tyco Fire & Security GmbH, 8212 Neuhausen am Rheinfall (CH)
(72) Inventor: QIU, Xiening, Guangdong 511685 (CN); XIAO, Tianlong, Guangdong 511685 (CN); ZHOU, Yuexian, Guangdong 511685 (CN); WU, Yawei, Guangdong 511685 (CN)
(74) Representative: Meissner Bolte Nürnberg
(86) International application number: PCT/CN2023/116717
(87) International publication number: WO 2024/051642

(57) **Abstract**

The present application provides a heat pump system and a four-way valve. The heat pump system comprises a compressor, a first flow path, a second flow path, a third flow path and the four-way valve. The heat pump system has a complete cooling and partial heating mode or a complete heating and partial cooling mode. When the heat pump system is in the complete cooling and partial heating mode, flow rates of fluids flowing through the first flow path and the third flow path can be adjusted by adjusting the four-way valve. When the heat pump system is in the complete heating and partial cooling mode, flow rates of fluids flowing through the second flow path and the third flow path can be adjusted by adjusting the four-way valve. When the heat pump system of the present application is in the complete cooling and partial heating mode, a heating capacity can be adjusted; and when the heat pump system is in the complete heating and partial

## Description

### Technical Field

The present application relates to the field of air conditioning, in particular to a heat pump system.

### Background Art

A heat pump system comprises a compressor, two heat exchangers, valve devices and a four-way valve, which can meet the requirements for providing users with an air conditioning cooling capacity and for providing users with an air conditioning heating capacity. However, such heat pump system has fewer operating modes. Therefore, there is a need for a heat pump system that has multiple operating modes in which the heat pump system can meet the requirements for providing users with an air conditioning cooling capacity, for providing users with an air conditioning heating capacity, for providing users with a hot water heating capacity, and for providing users with the hot water heating capacity and the air conditioning cooling capacity simultaneously.

### Summary of the Invention

To achieve the above purpose, the present application provides a heat pump system, comprising a compressor, a first flow path, a second flow path, a third flow path, a first heat exchanger, a second heat exchanger, a third heat exchanger and a four-way valve. The compressor comprises a suction port and an exhaust port. The first flow path has a first end and a second end. The second flow path has a first end and a second end. The third flow path has a first end and a second end. The first heat exchanger is disposed in the first flow path. The second heat exchanger is disposed in the second flow path. The third heat exchanger is disposed in the third flow path. The four-way valve has four communication ports. The second end of the first flow path, the second end of the second flow path and the second end of the third flow path are in communication to one common path converging point, the first end of the second flow path is in communication with the suction port, the first end of the first flow path, the exhaust port, the suction port and the first end of the third flow path are connected to the four communication ports, respectively, and the first end of the first flow path, the exhaust port, the suction port and the first end of the third flow path can be in controllable communication through the four-way valve. The heat pump system has at least one of a complete cooling and partial heating mode and a complete heating and partial cooling mode. When the heat pump system is in the complete cooling and partial heating mode, the exhaust port can be in communication with the first end of the first flow path and the first end of the third flow path through the four-way valve, and the heat pump system is configured to be able to adjust flow rates of fluids flowing through the first flow path and the third flow path by adjusting the four-way valve. When the heat pump system is in the complete heating and partial cooling mode, the exhaust port can be in communication with the first end of the first flow path through the four-way valve, the first end of the third flow path can be in communication with the suction port through the four-way valve, and the heat pump system is configured to be able to adjust flow rates of fluids flowing through the second flow path and the third flow path by adjusting the four-way valve.

According to the above heat pump system, when the heat pump system is in the complete cooling and partial heating mode, a sum of the flow rates of the fluids flowing through the first flow path and the third flow path is equal to the flow rate of the fluid flowing through the second flow path.

According to the above heat pump system, when the heat pump system is in the complete heating and partial cooling mode, the sum of the flow rates of the fluids flowing through the second flow path and the third flow path is equal to the flow rate of the fluid flowing through the first flow path.

According to the above heat pump system, the heat pump system has a cooling mode, and when the heat pump system is in the cooling mode, the exhaust port is in communication with the first end of the third flow path through the four-way valve and the suction port is disconnected from the first end of the first flow path through the four-way valve.

According to the above heat pump system, the heat pump system furthermore has a heating mode, and when the heat pump system is in the heating mode, the exhaust port is in communication with the first end of the first flow path through the four-way valve and the suction port is in communication with the first end of the third flow path through the four-way valve.

According to the above heat pump system, the heat pump system furthermore has a complete cooling and complete heating mode, and when the heat pump system is in the complete cooling and complete heating mode, the exhaust port is in communication with the first end of the first flow path through the four-way valve and the suction port is disconnected from the first end of the third flow path through the four-way valve.

According to the above heat pump system, the heat pump system furthermore has a defrosting mode, and when the heat pump system is in the defrosting mode, the exhaust port is in communication with the first end of the third flow path through the four-way valve and the first end of the first flow path is in communication with the suction port.

According to the above heat pump system, the heat pump system furthermore comprises a first valve device, a second valve device and a third valve device. The first valve device is disposed in the first flow path, and the first valve device comprises a first valve device inlet and a first valve device outlet. The second valve device is disposed in the second flow path, and the second valve device comprises a second valve device inlet and a second valve device outlet. The third valve device is disposed in the third flow path, and the third valve device comprises a third valve device inlet and a third valve device outlet. The first valve device inlet, the second valve device inlet and the third valve device inlet are connected to the path converging point.

According to the above heat pump system, the heat pump system furthermore comprises a first bypass, a third bypass, and a first one-way valve and a third one-way valve disposed in the first bypass and the third bypass, respectively. A first end of the first bypass is connected to the first valve device outlet, a first end of the third bypass is connected to the third valve device outlet, a second end of the first bypass and a second end of the third bypass are connected to one common bypass converging point to controllably bypass the first valve device and the third valve device, respectively, so that the first heat exchanger and the third heat exchanger can be in fluid communication with the bypass converging point, respectively.

The present application furthermore provides a four-way valve. The four-way valve comprises a housing and a valve body, and the valve body is disposed in the housing. The valve body has a central axis and can move relative to the housing around the central axis. The valve body is provided with a first channel chamber and a second channel chamber which are independent of each other. The housing is provided with a first communication port, a second communication port, a third communication port and a fourth communication port. The fourth communication port can be in communication with at least one of the first communication port, the second communication port and the third communication port through the second channel chamber.

According to the above four-way valve, the housing is cylindrical, the first communication port, the second communication port and the third communication port are disposed on the housing along a circumferential direction, and the fourth communication port is disposed along the central axis.

According to the above four-way valve, the valve body can rotate relative to the housing so that the four-way valve has a first state, a second state, a third state, a fourth state and a fifth state, and the four-way valve is configured as: when the four-way valve is in the first state, the first communication port is in communication with the fourth communication port through the second channel chamber, and the second communication port is disconnected from the third communication port; when the four-way valve is in the second state, the first communication port is in communication with the second communication port through the first channel chamber, and the third communication port is in communication with the fourth communication port through the second channel chamber; when the four-way valve is in the third state, the first communication port, the third communication port and the fourth communication port are in communication through the second channel chamber, and the second communication port is disconnected; when the four-way valve is in the fourth state, the third communication port is in communication with the fourth communication port through the second channel chamber, and the first communication port is disconnected from the second communication port; and when the four-way valve is in the fifth state, the first communication port is in communication with the fourth communication port through the second channel chamber, and the second communication port is in communication with the third communication port through the first channel chamber.

According to the above four-way valve, the four-way valve is configured as: when the four-way valve is in the second state, the valve body can rotate between a second state first position and a second state second position, and in the process of rotation between the second state first position and the second state second position, a value range of opening degrees/an opening degree of the first communication port and/or the second communication port is realized to be: ϕ∈(0%, 100%].

According to the above four-way valve, the opening degree of the first communication port is related to an overlapping area of the valve body and the first communication port.

According to the above four-way valve, the four-way valve is configured as: when the four-way valve is in the third state, the valve body can rotate between a third state first position and a third state second position, and in the process of rotation between the third state first position and the third state second position, it is realized that an opening degree of the third communication port decreases when the opening degree of the first communication port increases, and the opening degree of the third communication port increases when the opening degree of the first communication port decreases.

According to the above four-way valve, the opening degree of the first communication port is related to the overlapping area of the valve body and the first communication port, and the opening degree of the third communication port is related to an overlapping area of the valve body and the third communication port.

When the heat pump system of the present application is in the complete cooling and partial heating mode, a heating capacity can be adjusted; and when the heat pump system is in the complete heating and partial cooling mode, a cooling capacity can be adjusted.

Other features, advantages and embodiments of the present application may be set forth or become apparent by consideration of the following detailed description, accompanying drawings and claims. In addition, it should be understood that the above summaries of the invention and the following specific embodiments are all exemplary and intended to provide further explanations rather than limit the scope of the present application to be claimed. However, the detailed description and specific examples indicate only preferred embodiments of the present application. Various changes and modifications within the spirit and scope of the present application will become apparent to those skilled in the art from this detailed description.

### Brief Description of the Drawings

The features and advantages of the present application may be better understood by reading the following detailed description with reference to the accompanying drawings, in which like reference numerals refer to like parts throughout.
FIG. 1 is a system diagram of a heat pump system of the present application;
FIG. 2 is a schematic diagram of communicative connection between a control device and various components in the heat pump system shown in FIG. 1;
FIG. 3 is a schematic internal structure diagram of the control device in FIG. 2;
FIG. 4A to FIG. 4E show schematic diagrams of five communication relationships of a four-way valve;
FIG. 5 is a system diagram of the heat pump system shown in FIG. 1 in a cooling mode;
FIG. 6 is a system diagram of the heat pump system shown in FIG. 1 in a heating mode;
FIG 7A to FIG. 7B are system diagrams of the heat pump system shown in FIG. 1 in a complete heating and partial cooling mode;
FIG. 8 is a system diagram of the heat pump system shown in FIG. 1 in a complete cooling and partial heating mode;
FIG. 9 is a system diagram of the heat pump system shown in FIG. 1 in a complete heating and complete cooling mode;
FIG. 10 is a system diagram of the heat pump system shown in FIG. 1 in a defrosting mode; and
FIG 11A to FIG. 11C are an exemplary embodiment of the four-way valve in the heat pump system of the present application.

### Detailed Description of Embodiments

Various specific embodiments of the present application will be described below with reference to the accompanying drawings, which constitute a part of the specification. It should be understood that the ordinal numerals such as "first" and "second" used in the present application are only used for distinguishment and identification, and do not have any other meanings. If not specified, they do not represent a specific order, nor do they have a specific relevance. For example, the term "first heat exchanger" does not imply the existence of "second heat exchanger", nor does the term "second heat exchanger" imply the existence of "first heat exchanger".

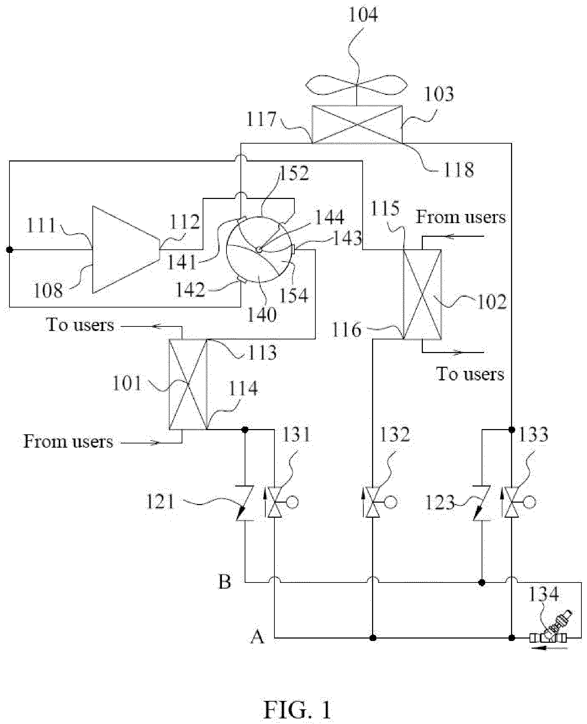

FIG. 1 is the system diagram of the heat pump system according to the present application, showing various components of the heat pump system and connection relationships thereof. As shown in FIG. 1, the heat pump system comprises a compressor 108, a first heat exchanger 101, a second heat exchanger 102, a third heat exchanger 103, a four-way valve 140, a first valve device 131, a second valve device 132, a third valve device 133 and a plurality of other valves to be described below. Connecting lines between various components (including the compressor 108, the three heat exchangers, the four-way valve 140, the three valve devices and the various other valves) shown in FIG. 1A represent connecting pipes.

The heat pump system comprises a first flow path, a second flow path and a third flow path. The first flow path, the second flow path and the third flow path are parallel paths. The first heat exchanger 101 and the first valve device 131 are disposed in series in the first flow path, the second heat exchanger 102 and the second valve device 132 are disposed in series in the second flow path, and the third heat exchanger 103 and the third valve device 133 are disposed in series in the third flow path. Specifically, a second flow port 114 of the first heat exchanger 101 is connected to a first valve device outlet of the first valve device 131, a second flow port 116 of the second heat exchanger 102 is connected to a second valve device outlet of the second valve device 132, and a second flow port 118 of the third heat exchanger 103 is connected to a third valve device outlet of the third valve device 133.

A first end of the first flow path (namely a first flow port 113 of the first heat exchanger 101) and a first end of the third flow path (namely a first flow port 117 of the third heat exchanger 103) are both connected to the four-way valve 140. A second end of the first flow path, a second end of the second flow path and a second end of the third flow path are connected to one common path converging point A. Specifically, the four-way valve 140 comprises four ports, namely a first communication port 141, a second communication port 142, a third communication port 143 and a fourth communication port 144. The first communication port 141 is connected to the first end of the third flow path, the second communication port 142 and the first end of the second flow path (namely a first flow port 115 of the second heat exchanger 102) are both connected to a suction port 111 of the compressor 108, the third communication port 143 is connected to the first end of the first flow path, and the fourth communication port 144 is connected to an exhaust port 112 of the compressor 108. A first valve device inlet of the first valve device 131, a second valve device inlet of the second valve device 132 and a third valve device inlet of the third valve device 133 are in communication with the path converging point A. In the embodiment of the present application, the first valve device 131, the second valve device 132 and the third valve device 133 can all be controllably turned on or off.

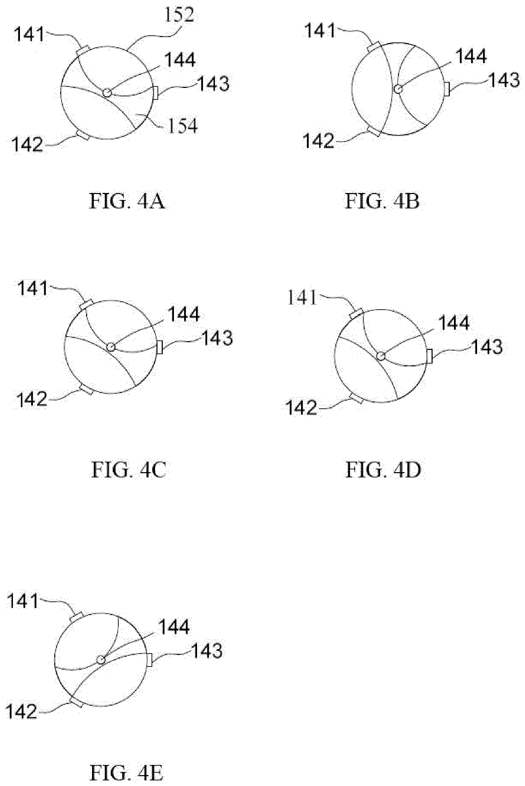

The four-way valve 140 comprises a housing 152 and a valve body 154. The valve body 154 is disposed in the housing 152 and can rotate relative to the housing 152. The first communication port 141, the second communication port 142, the third communication port 143 and the fourth communication port 144 are disposed on the housing 152. When the valve body 154 rotates relative to the housing 152, the valve body 154 will block or release the first communication port 141, the second communication port 142 and/or the third communication port 143, so that the four ports form different communication relationships. Different communication relationships will be specifically described with reference to FIG. 4A to FIG. 4F.

The heat pump system furthermore comprises a first bypass and a third bypass. A first end of the first bypass is connected between the second flow port 114 of the first heat exchanger 101 and the first valve device outlet of the first valve device 131 to enable the first end of the first bypass to be in communication with the second flow port 114 of the first heat exchanger 101. A first end of the third bypass is connected between the second flow port 118 of the third heat exchanger 103 and the third valve device outlet of the third valve device 133 to enable the first end of the third bypass to be in communication with the second flow port 118 of the third heat exchanger 103. A second end of the first bypass and a second end of the third bypass are connected to one common bypass converging point B so that the second flow port 114 of the first heat exchanger 101 and the second flow port 118 of the third heat exchanger 103 can be in communication with the bypass converging point B through the first bypass and the third bypass, respectively.

The heat pump system furthermore comprises a throttling device 134. The throttling device 134 is disposed between the path converging point A and the bypass converging point B to be used for throttling a fluid when the fluid at the bypass converging point B flows to the path converging point A.

The heat pump system furthermore comprises a first one-way valve 121 disposed in the first bypass and a third one-way valve 123 disposed in the third bypass, which are used for controlling communications and disconnections of the first bypass and the third bypass, respectively. The first one-way valve 121 enables a fluid (for example, a refrigerant) to flow from the second flow port 114 of the first heat exchanger 101 to the bypass converging point B through the first bypass. The third one-way valve 123 enables a fluid (for example, a refrigerant) to flow from the second flow port 118 of the third heat exchanger 103 to the bypass converging point B through the third bypass.

Those skilled in the art can understand that although the first one-way valve 121 and the third one-way valve 123 in the present application are both one-way valves, they can alternatively be disposed as other types of valves in other embodiments, as long as they enable upstream parts and downstream parts of the valves to be in controllable communication or disconnection.

In the embodiment of the present application, the first heat exchanger 101 is a water-side heat exchanger. When used as a condenser, it can be used for providing users with a heating capacity (for example, used for providing hot water for air conditioning and/or used for providing domestic hot water). It can also be used as an evaporator in a defrosting mode. The second heat exchanger 102 is a water-side heat exchanger. It can be used as an evaporator to provide the users with a cooling capacity (for example, to provide cold water for air conditioning). The third heat exchanger 103 is an air-side heat exchanger. It comprises a fan 104. It may be used as a condenser/evaporator for dissipating the heating capacity/cooling capacity to the outside world.

Those skilled in the art may understand that types of the above first heat exchanger 101, second heat exchanger 102 and third heat exchanger 103 are only illustrative, and in other examples, the first heat exchanger 101, the second heat exchanger 102 and the third heat exchanger 103 may be any form of heat exchangers. For example, the third heat exchanger 103 may be a ground source heat exchanger, a water source heat exchanger, or the like.

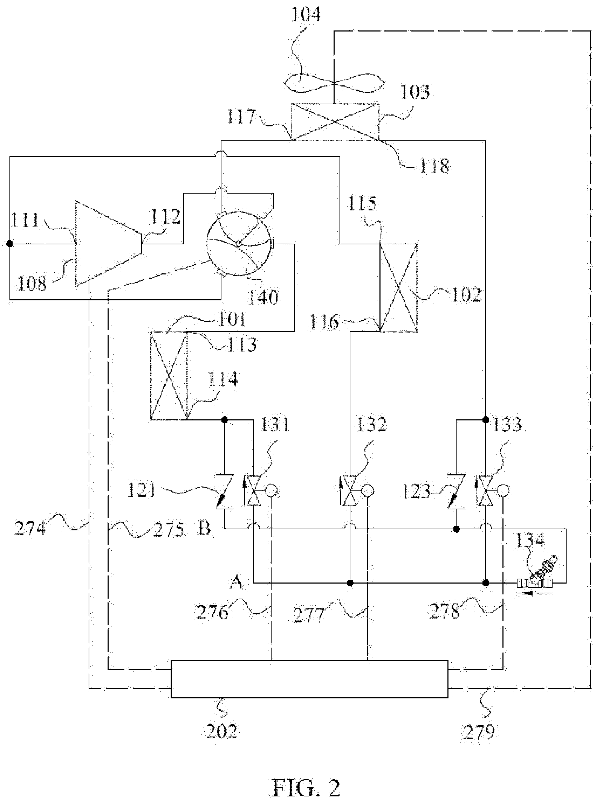

FIG. 2 is the schematic diagram of communicative connection between the control device 202 and various components in the heat pump system shown in FIG. 1. As shown in FIG. 2, the heat pump system furthermore comprises the control device 202. The control device 202 is in communicative connection with the compressor 108, the four-way valve 140, the first valve device 131, the second valve device 132, the third valve device 133 and the fan 104 through connections 274, 275, 276, 277, 278 and 279, respectively. The control device 202 can control the compressor 108 to be turned on and off, control a state of the four-way valve 140 (for example, the first state, the second state, the third state, the fourth state and the fifth state), control the first valve device 131, the second valve device 132 and the third valve device 133 to be turned on and off, and control the fan 104 to be turned on and off.

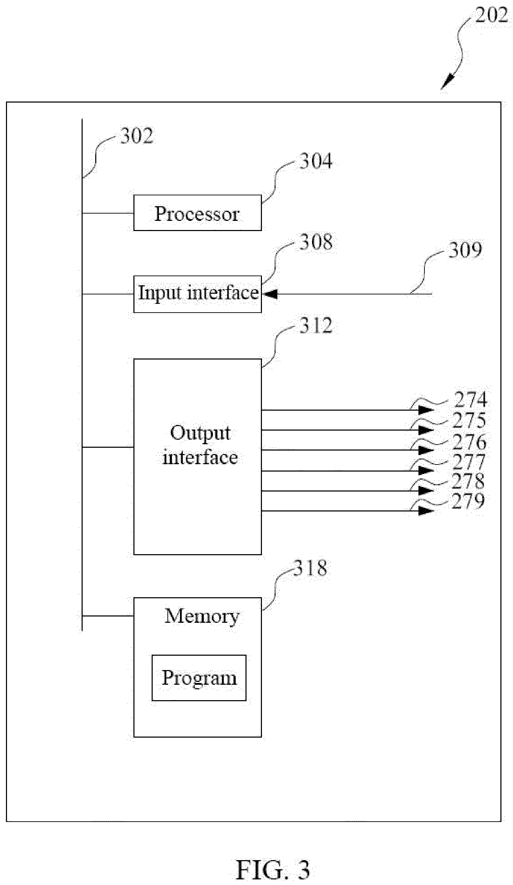

FIG. 3 is the schematic internal structure diagram of the control device 202 in FIG. 2. As shown in FIG. 3, the control device 202 comprises a bus 302, a processor 304, an input interface 308, an output interface 312 and a memory 318 having a control program. Various components in the control device 202, comprising the processor 304, the input interface 308, the output interface 312 and the memory 318 are in communicative connection with the bus 302, so that the processor 304 can control running of the input interface 308, the output interface 312 and the memory 318. Specifically, the memory 318 is used for storing a program, an instruction and data, while the processor 304 reads a program, an instruction and the data from the memory 318 and can write data to the memory 318. The processor 304 controls running of the input interface 308 and the output interface 312 by executing reading of the program and the instruction from the memory 318. As shown in FIG. 3, the output interface 312 is in communicative connection with the compressor 108, the four-way valve 140, the first valve device 131, the second valve device 132, the third valve device 133 and the fan 104 through the connections 274, 275, 276, 277, 278 and 279, respectively. The input interface 308 receives a running request and other running parameters of the heat pump system through a connection 309. The processor 304 controls running of the heat pump system by executing the program and the instruction in the memory 318. More specifically, the control device 202 can receive a running request for controlling the heat pump system through the input interface 308 (such as sending a request through a control panel), and send a control signal to each controlled component through the output interface 312, so that the heat pump system can run in a plurality of operating modes and can be switched between the operating modes.

In the heat pump system of the present application, the four-way valve 140, the first valve device 131, the second valve device 132, the third valve device 133 and the fan 104 are specifically controlled to realize the plurality of operating modes. The connection relationships between various components in the heat pump system in the present application are simple, and control logics are simple.

FIG. 4A to FIG. 4E show the schematic diagrams of the five communication relationships of the four-way valve 140, so that different communication relationships between the four ports are realized through different position states of the valve body 154 of the four-way valve 140. Specifically, the heat pump system has six modes, namely a cooling mode, a heating mode, a complete heating and partial cooling mode, a complete cooling and partial heating mode, a complete heating and complete cooling mode and a defrosting mode. The valve body 154 of the four-way valve 140 can rotate relative to the housing 152, so that the valve body 154 can have five states (namely a first state, a second state, a third state, a fourth state and a fifth state) relative to the housing 152, thereby realizing the six modes of the heat pump system. Specifically, when the valve body 154 is in the first state, the first communication port 141 is in communication with the fourth communication port 144, the second communication port 142 and the third communication port 143 are disconnected, and the heat pump system can realize the cooling mode. When the valve body 154 is in the second state, the first communication port 141 is in communication with the second communication port 142, the third communication port 143 is in communication with the fourth communication port 144, and the heat pump system can realize the heating mode and the complete heating and partial cooling mode. When the valve body 154 is in the third state, the first communication port 141, the third communication port 143 and the fourth communication port 144 are in communication, the second communication port 142 is disconnected, and the heat pump system can realize the complete cooling and partial heating mode. When the valve body 154 is in the fourth state, the third communication port 143 is in communication with the fourth communication port 144, the first communication port 141 and the second communication port 142 are disconnected, and the heat pump system can realize the complete cooling and complete heating mode. When the valve body 154 is in the fifth state, the first communication port 141 is in communication with the fourth communication port 144, the second communication port 142 is in communication with the third communication port 143, and the heat pump system can realize the defrosting mode.

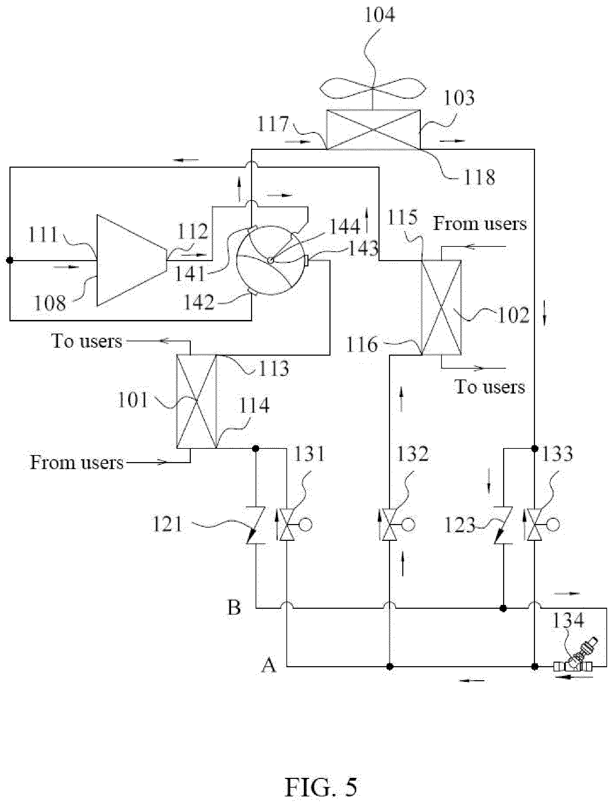

FIG. 5 to FIG. 10 are system diagrams of the heat pump system shown in FIG. 1, illustrating refrigerant circulation loops of the heat pump system running in different operating modes, wherein arrows indicate flow directions and flow paths of a refrigerant. Various operating modes shown in FIG. 5-FIG. 10 are described in detail below:

FIG. 5 is the system diagram of the heat pump system shown in FIG. 1 in the cooling mode. As shown in FIG. 4, through the control of the control device 202, the four-way valve 140 is in the first state, the second valve device 132 is turned on, the first valve device 131 and the third valve device 133 are turned off, and the fan 104 is turned on.

Specifically, a high-temperature and high-pressure gaseous refrigerant flowing out from the exhaust port 112 of the compressor 108 passes through the fourth communication port 144 and the first communication port 141 of the four-way valve 140 in sequence to flow into the third heat exchanger 103. In the third heat exchanger 103, the high-temperature and high-pressure gaseous refrigerant exchanges heat with air, thereby changing the high-temperature and high-pressure gaseous refrigerant into a high-pressure liquid refrigerant. After flowing out from the third heat exchanger 103, the high-pressure liquid refrigerant passes through the third one-way valve 123 and the throttling device 134 in sequence. After flowing through the throttling device 134, the high-pressure liquid refrigerant becomes a low-temperature and low-pressure refrigerant, and then flows to the second heat exchanger 102 through the second valve device 132. In the second heat exchanger 102, the low-temperature and low-pressure refrigerant exchanges heat with a fluid with a higher temperature on a user side, thereby reducing a temperature of the fluid on the user side to provide the user side with a fluid with a lower temperature (namely to provide a cooling capacity). The low-temperature and low-pressure refrigerant turns into a low-pressure gaseous refrigerant after exchanging heat with the fluid on the user side in the second heat exchanger 102. After flowing out from the second heat exchanger 102, the low-pressure gaseous refrigerant enters the compressor 108 again from the suction port 111 of the compressor 108 to become a high-temperature and high-pressure gaseous refrigerant, so as to complete circulation of the refrigerant.

Therefore, when the heat pump system is in the cooling mode, the compressor 108, the third heat exchanger 103, the second valve device 132 and the second heat exchanger 102 are connected into a refrigerant loop. The third heat exchanger 103 is used as a condenser, and the second heat exchanger 102 is used as an evaporator. The first heat exchanger 101 is not in the refrigerant circulation loop.

When the heat pump system is in the cooling mode, the cooling capacity provided by the second heat exchanger 102 can be adjusted by adjusting the compressor 108 (for example, adjusting a frequency of the compressor 108).

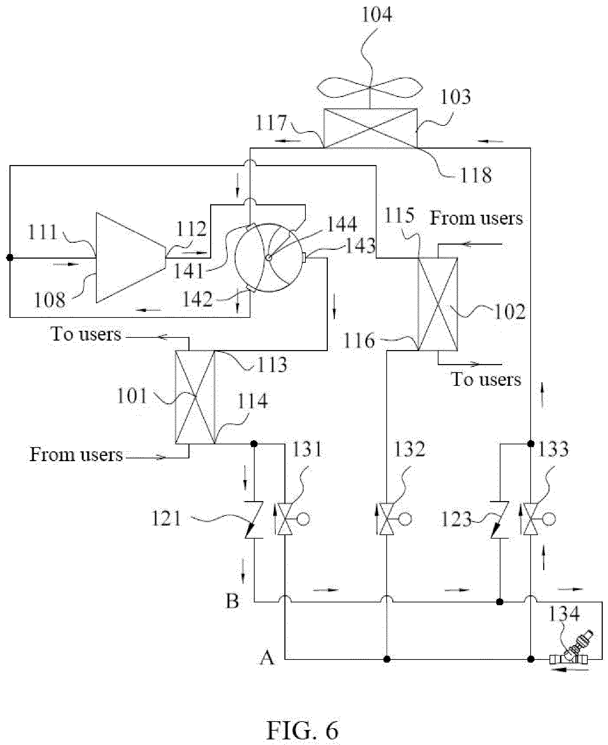

FIG. 6 is the system diagram of the heat pump system shown in FIG. 1 in the heating mode. As shown in FIG. 6, through the control of the control device 202, the four-way valve 140 is in the second state, the third valve device 133 is turned on, the first valve device 131 and the second valve device 132 are turned off, and the fan 104 is turned on.

Specifically, the high-temperature and high-pressure gaseous refrigerant flowing out from the exhaust port 112 of the compressor 108 passes through the fourth communication port 144 and the third communication port 143 of the four-way valve 140 in sequence to flow to the first heat exchanger 101. In the first heat exchanger 101, the high-temperature and high-pressure gaseous refrigerant exchanges heat with a fluid with a lower temperature on the user side, thereby increasing a temperature of the fluid on the user side to provide users with a fluid with a higher temperature (namely to provide a heating capacity). The high-temperature and high-pressure gaseous refrigerant becomes a high-pressure liquid refrigerant after exchanging heat with the fluid on the user side in the first heat exchanger 101. After flowing out from the first heat exchanger 101, the high-pressure liquid refrigerant passes through the first one-way valve 121 and the throttling device 134 in sequence. After flowing through the throttling device 134, the high-pressure liquid refrigerant becomes a low-temperature and low-pressure refrigerant, and then flows to the third heat exchanger 103 through the third valve device 133. In the third heat exchanger 103, the low-temperature and low-pressure refrigerant exchanges heat with air, thereby changing the low-temperature and low-pressure refrigerant into a low-pressure gaseous refrigerant. After passing through the first communication port 141 and the second communication port 142 of the four-way valve 140 in sequence, the low-pressure gaseous refrigerant enters the compressor 108 again through the suction port 111 of the compressor 108 to become a high-temperature and high-pressure gaseous refrigerant, thereby completing circulation of the refrigerant.

Therefore, when the heat pump system is in the heating mode, the compressor 108, the first heat exchanger 101, the third valve device 133 and the third heat exchanger 103 are connected in the refrigerant loop. The first heat exchanger 101 is used as a condenser, and the third heat exchanger 103 is used as an evaporator. The second heat exchanger 102 is not in the refrigerant circulation loop.

When the heat pump system is in the heating mode, the heating capacity provided by the first heat exchanger 101 can be adjusted by adjusting the compressor 108 (for example, adjusting the frequency of the compressor 108).

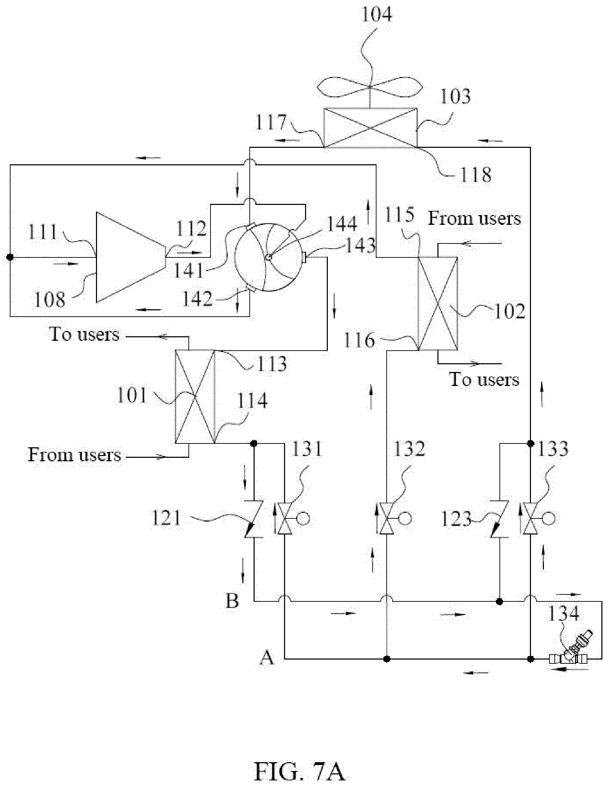

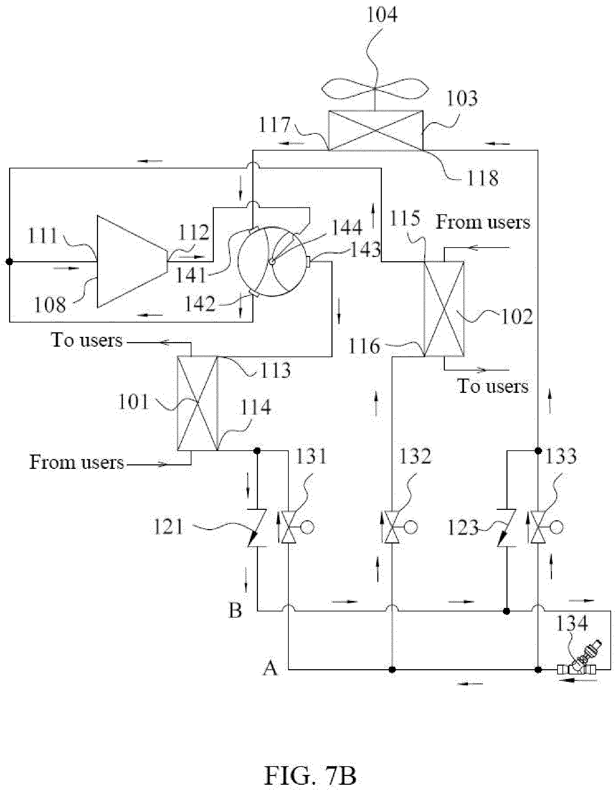

FIG. 7A to FIG. 7B are the system diagrams of the heat pump system shown in FIG. 1 in the complete heating and partial cooling mode, wherein FIG. 7A shows a first adjusting method of the valve body 154 for realizing the complete heating and partial cooling mode, and FIG. 7B shows a second adjusting method of the valve body 154 for realizing the complete heating and partial cooling mode. As shown in FIG. 7A to FIG. 7B, through the control of the control device 202, the four-way valve 140 is in the second state, the second valve device 132 and the third valve device 133 are turned on, the first valve device 131 is turned off, and the fan 104 is turned on.

Specifically, the high-temperature and high-pressure gaseous refrigerant flowing out from the exhaust port 112 of the compressor 108 passes through the fourth communication port 144 and the third communication port 143 of the four-way valve 140 in sequence to flow to the first heat exchanger 101. In the first heat exchanger 101, the high-temperature and high-pressure gaseous refrigerant exchanges heat with a fluid with a lower temperature on the user side, thereby increasing a temperature of the fluid on the user side to provide users with a fluid with a higher temperature (namely to provide a heating capacity). The high-temperature and high-pressure gaseous refrigerant becomes a high-pressure liquid refrigerant after exchanging heat with the fluid on the user side in the first heat exchanger 101. After flowing out from the first heat exchanger 101, the high-pressure liquid refrigerant flows to the throttling device 134 through the first one-way valve 121. The high-pressure liquid refrigerant passes through the throttling device 134 to become a low-temperature and low-pressure refrigerant, which is then divided into two paths at the path converging point A. The first path of low-temperature and low-pressure refrigerant flows to the second heat exchanger 102. In the second heat exchanger 102, the low-temperature and low-pressure refrigerant exchanges heat with a fluid with a higher temperature on the user side, thereby reducing a temperature of the fluid on the user side to provide the users with a fluid with a lower temperature (namely providing the cooling capacity). The low-temperature and low-pressure refrigerant turns into a low-pressure gaseous refrigerant after exchanging heat with the fluid on the user side in the second heat exchanger 102. The second path of low-temperature and low-pressure refrigerant flows to the third heat exchanger 103. In the third heat exchanger 103, the low-temperature and low-pressure refrigerant exchanges heat with air, thereby changing the low-temperature and low-pressure refrigerant into a low-pressure gaseous refrigerant. After passing through the first communication port 141 and the second communication port 142 of the four-way valve 140 in sequence, the low-pressure gaseous refrigerant converges with the low-pressure gaseous refrigerant flowing out from the second heat exchanger 102, and then enters the compressor 108 again from the suction port 111 of the compressor 108 to become a high-temperature and high-pressure gaseous refrigerant, thereby completing circulation of the refrigerant.

When the heat pump system is in the complete heating and partial cooling mode, the heating capacity provided by the first heat exchanger 101 and the cooling capacity provided by the second heat exchanger 102 can be adjusted simultaneously by adjusting the compressor 108 (for example, adjusting the frequency of the compressor 108). In addition, when the heat pump system is in the complete heating and partial cooling mode, the cooling capacity provided by the second heat exchanger 102 can be adjusted independently by adjusting the four-way valve 140, without changing the heating capacity provided by the first heat exchanger 101. Specifically, when the heat pump system is in the complete heating and partial cooling mode, the second flow path and the third flow path are in a parallel connection state, and the flow rate of a fluid flowing through the first flow path (namely the first heat exchanger 101) is equal to a sum of the flow rates of fluids flowing through the second flow path (namely the second heat exchanger 102) and the third flow path (namely the third heat exchanger 103). Therefore, under the condition that the flow rate of the fluid flowing out from the compressor 108 is constant, the flow rate of the fluid flowing through the third flow path (namely the third heat exchanger 103) can be adjusted by adjusting opening degrees/an opening degree of the first communication port 141 and/or the second communication port 142 of the four-way valve 140, thereby changing the flow rate of the fluid flowing through the second flow path (namely the second heat exchanger 102).

Specific details of the four-way valve 140 in the second state are described below with reference to FIG. 6 and FIG. 7A to FIG. 7B. The first adjusting method of the valve body 154 for realizing the complete heating and partial cooling mode will be described with reference to FIG. 7A. Specifically, when the four-way valve 140 is in the second state, the valve body 154 can rotate between a second state first position and a second state second position, and in the process of one-way rotation between the second state first position and the second state second position, a value range of the opening degree of the first communication port 141 is realized to be: ϕ∈(0%, 100%], the opening degree of the first communication port gradually increases, and an opening degree of the second communication port 142 keeps 100%. For example, when the valve body 154 is at the second state first position, the opening degree of the first communication port 141 is close to 0%; and when the valve body 154 is in the second state second position, the opening degree of the first communication port 141 is 100%. In the present application, for example, when the heat pump system is in the heating mode as shown in FIG. 6, the valve body 154 is located at the second state second position, and the opening degree of the first communication port 141 is 100%. When the heat pump system is in the complete heating and partial cooling mode as shown in FIG. 7A, the valve body 154 can be at either position between the second state first position and the second state second position, or stay at the second state second position, and the opening degree of the first communication port 141 is ϕ∈(0%, 100%].

Similarly, the second adjusting method of the valve body 154 for realizing the complete heating and partial cooling mode will be described with reference to FIG. 7B. Specifically, when the four-way valve 140 is in the second state, the valve body 154 can rotate between the second state first position and the second state second position, and in the process of one-way rotation between the second state first position and the second state second position, a value range of the opening degree of the second communication port 142 is realized to be: ϕ∈(0%, 100%], the opening degree of the second communication port gradually increases, and the opening degree of the first communication port 141 keeps 100%. For example, when the valve body 154 is at the second state first position, the opening degree of the second communication port 142 is close to 0%; and when the valve body 154 is at the second state second position, the opening degree of the second communication port 142 is 100%. In the present application, for example, when the heat pump system is in the heating mode as shown in FIG. 6, the valve body 154 is located at the second state second position, and the opening degree of the second communication port 142 is 100%. When the heat pump system is in the complete heating and partial cooling mode as shown in FIG. 7B, the valve body 154 can be at either position between the second state first position and the second state second position, or stay at the second state second position, and the opening degree of the second communication port 142 is ϕ∈(0%, 100%].

Those skilled in the art can understand that since the first communication port 141 and the second communication port 142 are in a series connection relationship when the heat pump system is in the complete heating and partial cooling mode, adjustment of either of the opening degree of the first communication port 141 or the opening degree of the second communication port 142 can adjust the flow rate of the fluid flowing through the third flow path. In addition, simultaneous adjustment of the first communication port 141 and the second communication port 142 also falls within the scope of protection of the present application.

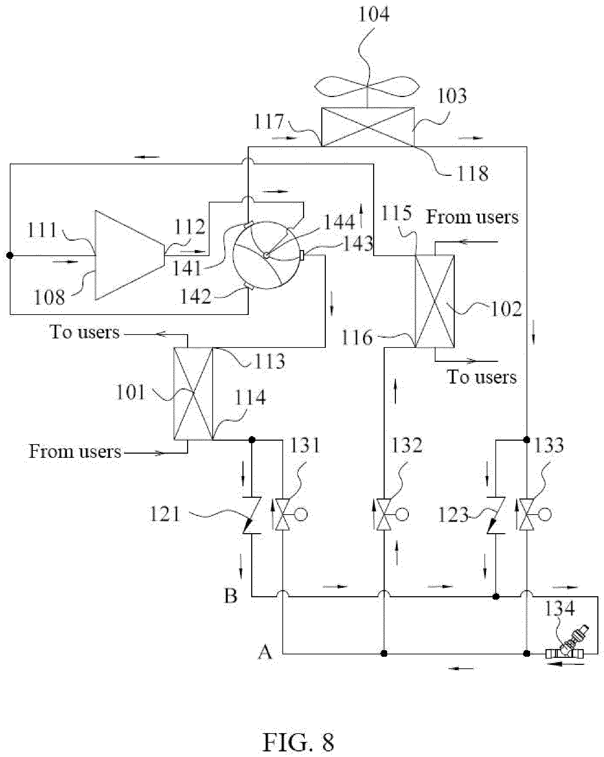

FIG. 8 is the system diagram of the heat pump system shown in FIG. 1 in the complete cooling and partial heating mode. As shown in FIG. 8, through the control of the control device 202, the four-way valve 140 is in the third state, the second valve device 132 is turned on, the first valve device 131 and the third valve device 133 are turned off, and the fan 104 is turned on.

Specifically, after passing through the fourth communication port 144 of the four-way valve 140, the high-temperature and high-pressure gaseous refrigerant flowing out from the exhaust port 112 of the compressor 108 is divided into two paths. The first path of high-temperature and high-pressure gaseous refrigerant flows out from the third communication port 143 of the four-way valve 140 and flows to the first heat exchanger 101. In the first heat exchanger 101, the high-temperature and high-pressure gaseous refrigerant exchanges heat with a fluid with a lower temperature on the user side, thereby increasing a temperature of the fluid on the user side to provide users with a fluid with a higher temperature (namely to provide the heating capacity). The high-temperature and high-pressure gaseous refrigerant becomes a high-pressure liquid refrigerant after exchanging heat with the fluid on the user side in the first heat exchanger 101. After flowing out from the first heat exchanger 101, the high-pressure liquid refrigerant flows to the path converging point B through the first one-way valve 121. The second path of high-temperature and high-pressure gaseous refrigerant flows out from the first communication port 141 of the four-way valve 140, and flows to the third heat exchanger 103. In the third heat exchanger 103, the high-temperature and high-pressure gaseous refrigerant exchanges heat with air, thereby changing the high-temperature and high-pressure gaseous refrigerant into a high-pressure liquid refrigerant. After flowing out from the third heat exchanger 103, the high-pressure liquid refrigerant flows to the path converging point B through the third one-way valve 123. The two paths of refrigerants converge at the path converging point B, and become a low-temperature and low-pressure refrigerant after passing through the throttling device 134, and then the low-temperature and low-pressure refrigerant flows to the second heat exchanger 102 through the second valve device 132. In the second heat exchanger 102, the low-temperature and low-pressure refrigerant exchanges heat with a fluid with a higher temperature on a user side, thereby reducing a temperature of the fluid on the user side to provide the user side with a fluid with a lower temperature (namely to provide a cooling capacity). The low-temperature and low-pressure refrigerant turns into a low-pressure gaseous refrigerant after exchanging heat with the fluid on the user side in the second heat exchanger 102. After flowing out from the second heat exchanger 102, the low-pressure gaseous refrigerant enters the compressor 108 again from the suction port 111 of the compressor 108 to become a high-temperature and high-pressure gaseous refrigerant, so as to complete circulation of the refrigerant.

When the heat pump system is in the complete cooling and partial heating mode, the heating capacity provided by the first heat exchanger 101 and the cooling capacity provided by the second heat exchanger 102 can be adjusted simultaneously by adjusting the compressor 108 (for example, adjusting the frequency of the compressor 108). In addition, when the heat pump system is in the complete cooling and partial heating mode, the heating capacity provided by the first heat exchanger 101 can be adjusted independently by adjusting the four-way valve 140, without changing the cooling capacity provided by the second heat exchanger 102. Specifically, when the heat pump system is in the complete cooling and partial heating mode, the first flow path and the third flow path are in a parallel connection state, and the flow rate of the fluid flowing through the second flow path (namely the second heat exchanger 102) is equal to the sum of the flow rates of the fluids flowing through the first flow path (namely the first heat exchanger 101) and the third flow path (namely the third heat exchanger 103). Therefore, under the condition that the flow rate of the fluid flowing out from the compressor 108 is constant, the flow rates of the fluids flowing through the first flow path (namely the first heat exchanger 101) and the third flow path (namely the third heat exchanger 103) can be adjusted by adjusting the opening degrees of the first communication port 141 and the third communication port 143 of the four-way valve 140, thereby changing the flow rate of the fluid flowing through the first flow path (namely the first heat exchanger 101).

Specific details of the four-way valve 140 in the third state are described below with reference to FIG. 8. Specifically, when the four-way valve 140 is in the third state, the valve body 154 can rotate between a third state first position and a third state second position, and in the process of rotation between the second state third position and the second state third position, it is realized that the opening degree of the third communication port 143 decreases while the opening degree of the first communication port 141 increases (that is, when the flow rate of the fluid flowing through the first flow path increases, the flow rate of the fluid flowing through the third flow path decreases), and the opening degree of the third communication port 143 increases while the opening degree of the first communication port 141 decreases (that is, when the flow rate of the fluid flowing through the first flow path decreases, the flow rate of the fluid flowing through the third flow path increases).

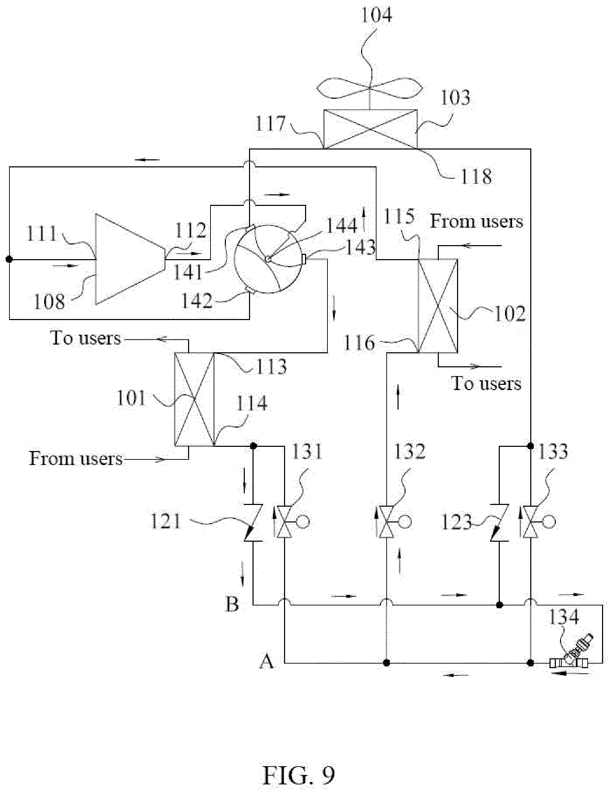

FIG. 9 is the system diagram of the heat pump system shown in FIG. 1 in the complete cooling and complete heating mode. As shown in FIG. 9, through the control of the control device 202, the four-way valve 140 is in the fourth state, the second valve device 132 is turned on, the first valve device 131 and the third valve device 133 are turned off, and the fan 104 is turned off.

Specifically, the high-temperature and high-pressure gaseous refrigerant flowing out from the exhaust port 112 of the compressor 108 passes through the fourth communication port 144 and the third communication port 143 of the four-way valve 140 in sequence to flow to the first heat exchanger 101. In the first heat exchanger 101, the high-temperature and high-pressure gaseous refrigerant exchanges heat with a fluid with a lower temperature on the user side, thereby increasing a temperature of the fluid on the user side to provide users with a fluid with a higher temperature (namely to provide a heating capacity). The high-temperature and high-pressure gaseous refrigerant becomes a high-pressure liquid refrigerant after exchanging heat with the fluid on the user side in the first heat exchanger 101. After flowing out from the first heat exchanger 101, the high-pressure liquid refrigerant passes through the first one-way valve 121 and the throttling device 134 in sequence. After flowing through the throttling device 134, the high-pressure liquid refrigerant becomes a low-temperature and low-pressure refrigerant, and then flows to the second heat exchanger 102 through the second valve device 132. In the second heat exchanger 102, the low-temperature and low-pressure refrigerant exchanges heat with a fluid with a higher temperature on the user side, thereby reducing a temperature of the fluid on the user side to provide the users with a fluid with a lower temperature (namely providing the cooling capacity). The low-temperature and low-pressure refrigerant turns into a low-pressure gaseous refrigerant after exchanging heat with the fluid on the user side in the second heat exchanger 102. The low-pressure gaseous refrigerant passes through the first flow port 115 of the second heat exchanger 102 and enters the compressor 108 from the suction port 111 of the compressor 108 to become a high-temperature and high-pressure gaseous refrigerant, thereby completing circulation of the refrigerant.

Therefore, the compressor 108, the first heat exchanger 101, the second valve device 132 and the second heat exchanger 102 are connected into the refrigerant loop when the heat pump system is in the complete cooling and complete heating mode. The first heat exchanger 101 is used as a condenser, and the second heat exchanger 102 is used as an evaporator. The third heat exchanger 103 is not in the refrigerant circulation loop.

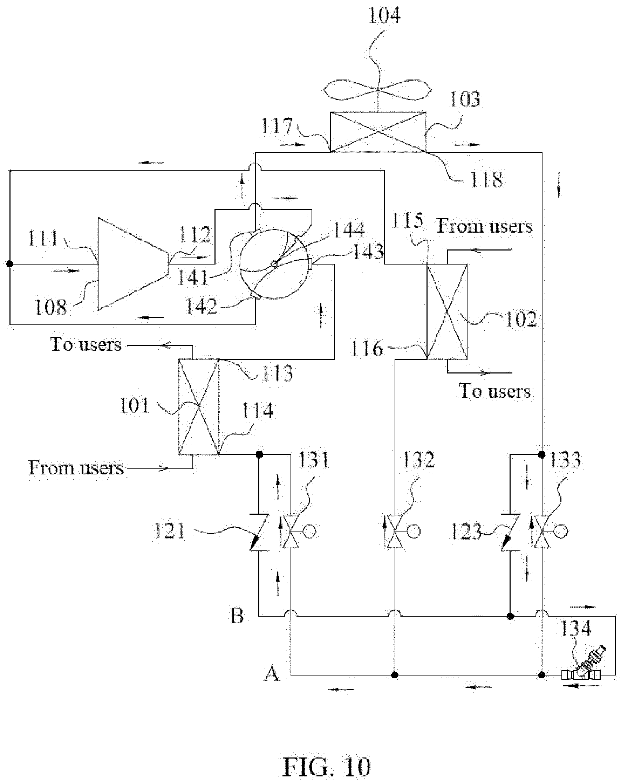

FIG. 10 is the system diagram of the heat pump system shown in FIG. 1 in the defrosting mode. As shown in FIG. 10, through the control of the control device 202, the four-way valve 140 is in the fifth state, the first valve device 131 is turned on, the second valve device 132 and the third valve device 133 are turned off, and the fan 104 is turned off.

Specifically, a high-temperature and high-pressure gaseous refrigerant flowing out from the exhaust port 112 of the compressor 108 passes through the fourth communication port 144 and the first communication port 141 of the four-way valve 140 in sequence to flow into the third heat exchanger 103. In the third heat exchanger 103, the high-temperature and high-pressure gaseous refrigerant transfers heat to frost condensed on the third heat exchanger 103, thereby melting the frost. At this time, the fan 104 in the third heat exchanger 103 is not turned on. After becoming a high-pressure liquid refrigerant in the third heat exchanger 103, the high-temperature and high-pressure gaseous refrigerant passes through the third one-way valve 123 and the throttling device 134 in sequence. After flowing through the throttling device 134, the high-pressure liquid refrigerant becomes a low-temperature and low-pressure refrigerant, and then flows to the first heat exchanger 101 through the first valve device 131. In the first heat exchanger 101, the low-temperature and low-pressure refrigerant can exchange heat with a fluid on the user side in the first heat exchanger 101, thereby changing the low-temperature and low-pressure refrigerant into a low-pressure gaseous refrigerant. After passing through the third communication port 143 and the second communication port 142 of the four-way valve 140 in sequence, the low-pressure gaseous refrigerant enters the compressor 108 from the suction port 111 of the compressor 108 to become a high-temperature and high-pressure gaseous refrigerant, thereby completing circulation of the refrigerant.

Therefore, when the heat pump system is in the defrosting mode, the compressor 108, the third heat exchanger 103, the first valve device 131 and the first heat exchanger 101 are connected into the refrigerant loop. The third heat exchanger 103 is used as a condenser, and the first heat exchanger 101 is used as an evaporator. The second heat exchanger 102 is not in the refrigerant circulation loop.

A traditional four-pipe heat pump system can realize the complete cooling and complete heating mode, but in this mode, the cooling capacity and the heating capacity can only be loaded or unloaded simultaneously, so the actual demands for the cooling capacity and the heating capacity cannot be matched simultaneously.

In the heat pump system of the present application, when the heat pump system is in the complete cooling and partial heating mode, under the condition that the cooling capacity (namely the heat exchange amount provided by the second heat exchanger 102) is constant, the opening degrees of the first communication port 141 and the third communication port 143 can be adjusted by controlling the rotation of the valve body 154 in the four-way valve 140 to adjust the flow rate of the refrigerant passing through the first heat exchanger 101, thereby adjusting the heating capacity (namely the heat exchange amount provided by the first heat exchanger 101). When the heat pump system is in the complete heating and partial cooling mode, under the condition that the heating capacity (namely the heat exchange amount provided by the first heat exchanger 101) keeps constant, the flow rate of the refrigerant passing through the third heat exchanger 103 can be adjusted by controlling the rotation of the valve body 154 in the four-way valve 140. Since the sum of the flow rate of the refrigerant passing through the third heat exchanger 103 and the flow rate of the refrigerant passing through the second heat exchanger 102 is constant, the flow rate of the refrigerant passing through the second heat exchanger 102 can be adjusted by adjusting the flow rate of the refrigerant passing through the third heat exchanger 103, thereby adjusting the cooling capacity (namely the heat exchange amount provided by the second heat exchanger 102).

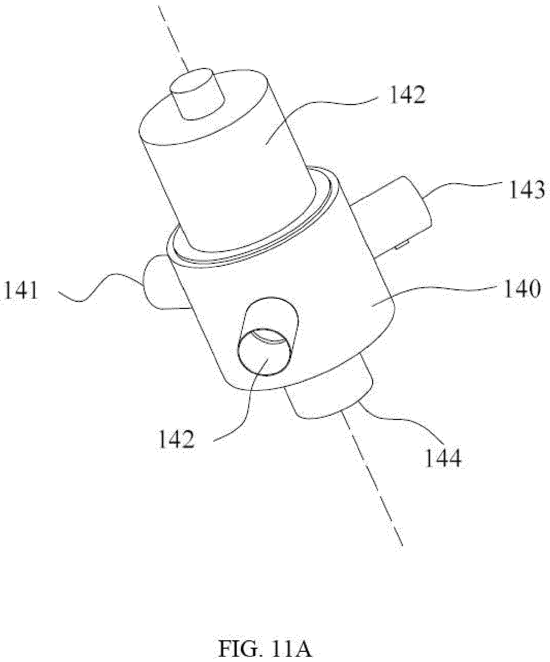

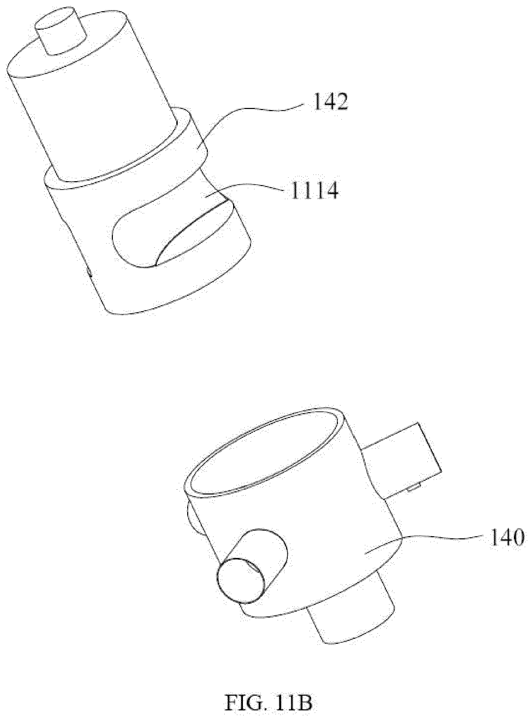

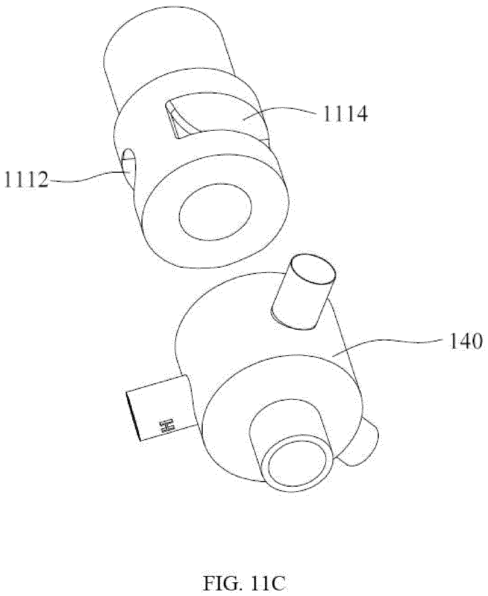

FIG. 11A to FIG. 11C are the exemplary embodiment of the four-way valve 140 in the heat pump system according to the present application. As shown in FIG. 11A to FIG. 11C, the four-way valve 140 comprises a roughly cylindrical housing 152. The housing 152 defines a containing cavity for containing the valve body 154. The housing 152 is uniformly provided with three communication pipes in communication with the containing cavity in the circumferential direction, and the first communication port 141, the second communication port 142 and the third communication port 143 are formed at free ends of the three communication pipes, respectively. The valve body 154 is roughly cylindrical and is disposed along the same central axis as the housing 152. It is disposed in the containing cavity and can rotate relative to the housing 152 around the central axis of the cylinder. The fourth communication pipe is disposed along the central axis and extends downward from a lower surface of the housing 152. The fourth communication port 144 is formed at a lower end (namely a free end) of the fourth communication pipe. The valve body 154 is provided with two channel chambers, namely a first channel chamber 1112 and a second channel chamber 1114, respectively. The first channel chamber 1112 and the second channel chamber 1114 are disposed independently of each other (namely not in communication with each other). The first channel chamber 1112 is formed by inwardly recessing from the circumferential direction of the valve body 154, and its opening in the circumferential direction is at a certain angle. The second channel chamber 1114 is also formed by inwardly recessing from the circumferential direction of the valve body 154, and its opening in the circumferential direction is at a certain angle. In addition, the second channel chamber 1114 extends downward along the central axis and is always in communication with the fourth communication port 144, so that the fourth communication port 144 can be in communication with at least one of the first communication port 141, the second communication port 142 and the third communication port 143 through the second channel chamber 1114.

Angles of the openings of the first channel chamber 1112 and the second channel chamber 1114 in the circumferential direction are set to be able to realize the five states shown in FIG. 4A to FIG. 4E, thereby realizing various operating modes in the heat pump system. Specifically, when the four-way valve 140 is in the first state, the first communication port 141 is in communication with the fourth communication port 144 through the second channel chamber 1114, and the second communication port 142 and the third communication port 143 are disconnected. When the four-way valve 140 is in the second state, the first communication port 141 is in communication with the second communication port 142 through the first channel chamber 1112, and the third communication port 143 is in communication with the fourth communication port 144 through the second channel chamber 1114. The four-way valve 140 is configured as: when the valve body 154 rotates between the second state first position and the second state second position, the value range of the opening degree of the first communication port 141 is realized to be: ϕ∈(0%, 100%]. The opening degree of the first communication port 141 is related to the overlapping area of the valve body 154 and the first communication port 141. That is, when the overlapping area of a circumferential portion of the valve body 154 and the first communication port 141 is 100%, the opening degree of the first communication port 141 is 0%; and when the overlapping area of the circumferential portion of the valve body 154 and the first communication port 141 is 0% (that is, the opening of the first channel chamber 1112 in the circumferential direction is aligned with the first communication port 141), the opening degree of the first communication port 141 is 100%. Similarly, the value range of the opening degree of the second communication port 142 can also be realized to be: ϕ∈(0%, 100%], which is not described herein again. Therefore, the flow rate of the fluid flowing through the first channel chamber 1112 can be adjusted by adjusting the opening degrees/opening degree of the first communication port 141 and/or the second communication port 142. When the four-way valve 140 is in the third state, the first communication port 141, the third communication port 143 and the fourth communication port 144 are in communication through the second channel chamber 1114, and the second communication port 142 is disconnected. The four-way valve 140 is configured as: when the valve body 154 rotates between the third state first position and the third state second position, it is realized that the opening degree of the third communication port 143 decreases when the opening degree of the first communication port 141 increases, and the opening degree of the third communication port 143 increases when the opening degree of the first communication port 141 decreases. The opening degree of the first communication port 141 is related to the overlapping area of the valve body 154 and the first communication port 141. The opening degree of the third communication port 143 is related to the overlapping area of the valve body 154 and the third communication port 143. That is, when the overlapping area of the circumferential portion of the valve body 154 and the third communication port 143 is 100%, the opening degree of the third communication port 143 is 0%; and when the overlapping area of the circumferential portion of the valve body 154 and the third communication port 143 is 0% (that is, the opening of the second channel chamber 1114 in the circumferential direction is aligned with the third communication port 143), the opening degree of the third communication port 143 is 100%. When the four-way valve 140 is in the fourth state, the third communication port 143 is in communication with the fourth communication port 144 through the second channel chamber 1114, and the first communication port 141 and the second communication port 142 are disconnected. When the four-way valve 140 is in the fifth state, the first communication port 141 is in communication with the second communication port 142 through the second channel chamber 1114, and the second communication port 142 is in communication with the third communication port 143 through the first channel chamber 1112.

It should be noted that although the embodiments of the present application show the four-way valve 140 with a specific communication structure, those skilled in the art may understand that any four-way valve that can realize the above communication and switching modes falls with the scope of protection of the present application.

Although the present disclosure has been described in conjunction with the examples of embodiments outlined above, various alternatives, modifications, variations, improvements and/or substantial equivalents, whether known or foreseeable now or soon, may become apparent to those of ordinary skill in the art. In addition, the technical effects and/or technical problems described in this specification are exemplary rather than restrictive. Therefore, the disclosures in this specification may be used to solve other technical problems and have other technical effects and/or can solve other technical problems. Accordingly, the examples of embodiments of the present disclosure set forth above are intended to be illustrative rather than restrictive. Various changes may be made without departing from the spirit or scope of the present disclosure. Accordingly, the present disclosure is intended to embrace all known or earlier developed alternatives, modifications, variations, improvements and/or substantial equivalents.

## Claims

1. A heat pump system, **characterized in that** the heat pump system comprises:
a compressor (108), wherein the compressor (108) comprises a suction port (111) and an exhaust port (112);
a first flow path, wherein the first flow path has a first end and a second end;
a second flow path, wherein the second flow path has a first end and a second end;
a third flow path, wherein the third flow path has a first end and a second end;
a first heat exchanger (101), wherein the first heat exchanger (101) is disposed in the first flow path;
a second heat exchanger (102), wherein the second heat exchanger (102) is disposed in the second flow path;
a third heat exchanger (103), wherein the third heat exchanger (103) is disposed in the third flow path; and
a four-way valve (140), wherein the four-way valve (140) has four communication ports, wherein the second end of the first flow path, the second end of the second flow path and the second end of the third flow path are in communication to a common path converging point, the first end of the second flow path is in communication with the suction port (111), the first end of the first flow path, the exhaust port (112), the suction port (111) and the first end of the third flow path are connected to the four communication ports, respectively, and the first end of the first flow path, the exhaust port (112), the suction port (111) and the first end of the third flow path can be in controllable communication through the four-way valve (140);
wherein the heat pump system has at least one of a complete cooling and partial heating mode and a complete heating and partial cooling mode, and is configured as:
when the heat pump system is in the complete cooling and partial heating mode, the exhaust port (112) can be in communication with the first end of the first flow path and the first end of the third flow path through the four-way valve (140), and the heat pump system is configured to be able to adjust flow rates of fluids flowing through the first flow path and the third flow path by adjusting the four-way valve (140);
and when the heat pump system is in the complete heating and partial cooling mode, the exhaust port (112) can be in communication with the first end of the first flow path through the four-way valve (140), the first end of the third flow path can be in communication with the suction port (111) through the four-way valve (140), and the heat pump system is configured to be able to adjust flow rates of fluids flowing through the second flow path and the third flow path by adjusting the four-way valve (140).

2. The heat pump system according to Claim 1, **characterized in that**
when the heat pump system is in the complete cooling and partial heating mode, a sum of the flow rates of the fluids flowing through the first flow path and the third flow path is equal to the flow rate of the fluid flowing through the second flow path.

3. The heat pump system according to Claim 1, **characterized in that**
when the heat pump system is in the complete heating and partial cooling mode, a sum of the flow rates of the fluids flowing through the second flow path and the third flow path is equal to the flow rate of the fluid flowing through the first flow path.

4. The heat pump system according to Claim 1, **characterized in that**
the heat pump system has a cooling mode, and when the heat pump system is in the cooling mode, the exhaust port (112) is in communication with the first end of the third flow path through the four-way valve (140) and the suction port (111) is disconnected from the first end of the first flow path through the four-way valve (140).

5. The heat pump system according to Claim 1, **characterized in that**
the heat pump system furthermore has a heating mode, and when the heat pump system is in the heating mode, the exhaust port (112) is in communication with the first end of the first flow path through the four-way valve (140) and the suction port (111) is in communication with the first end of the third flow path through the four-way valve (140).

6. The heat pump system according to Claim 1, **characterized in that**
the heat pump system furthermore has a complete cooling and complete heating mode, and when the heat pump system is in the complete cooling and complete heating mode, the exhaust port (112) is in communication with the first end of the first flow path through the four-way valve (140) and the suction port (111) is disconnected from the first end of the third flow path through the four-way valve (140).

7. The heat pump system according to Claim 1, **characterized in that**
the heat pump system furthermore has a defrosting mode, and when the heat pump system is in the defrosting mode, the exhaust port (112) is in communication with the first end of the third flow path through the four-way valve (140) and the first end of the first flow path is in communication with the suction port (111).

8. The heat pump system according to Claim 1, **characterized in that** the heat pump system furthermore comprises:
a first valve device (131), wherein the first valve device (131) is disposed in the first flow path, and the first valve device (131) comprises a first valve device inlet and a first valve device outlet;
a second valve device (132), wherein the second valve device (132) is disposed in the second flow path, and the second valve device (132) comprises a second valve device inlet and a second valve device outlet; and
a third valve device (133), wherein the third valve device (133) is disposed in the third flow path, and the third valve device (133) comprises a third valve device inlet and a third valve device outlet;
wherein the first valve device inlet, the second valve device inlet and the third valve device inlet are connected to the path converging point.

9. The heat pump system according to Claim 8, **characterized in that**
the heat pump system furthermore comprises a first bypass, a third bypass, and a first one-way valve (121) and a third one-way valve (123) which are disposed in the first bypass and the third bypass, respectively;
wherein a first end of the first bypass is connected to the first valve device outlet, a first end of the third bypass is connected to the third valve device outlet, a second end of the first bypass and a second end of the third bypass are connected to one common bypass converging point to controllably bypass the first valve device (131) and the third valve device (133), respectively, so that the first heat exchanger (101) and the third heat exchanger (103) can be in fluid communication with the bypass converging point, respectively.

10. A four-way valve, **characterized in that** the four-way valve (140) comprises:
a housing (152); and
a valve body (154), wherein the valve body (154) is disposed in the housing (152);
the valve body (154) has a central axis and can move relative to the housing (152) around the central axis, and the valve body (154) is provided with a first channel chamber (1112) and a second channel chamber (1114) independent of each other;
the housing (152) is provided with a first communication port (141), a second communication port (142), a third communication port (143) and a fourth communication port (144);
wherein the fourth communication port (144) can be in communication with at least one of the first communication port (141), the second communication port (142) and the third communication port (143) through the second channel chamber (1114).

11. The four-way valve according to Claim 10, **characterized in that**
the housing (152) is cylindrical, and the first communication port (141), the second communication port (142) and the third communication port (143) are disposed on the housing (152) along a circumferential direction, and the fourth communication port (144) is disposed along the central axis.

12. The four-way valve according to Claim 10, **characterized in that**
the valve body (154) can rotate relative to the housing (152) so that the four-way valve has a first state, a second state, a third state, a fourth state and a fifth state, and the four-way valve is configured as:
when the four-way valve is in the first state, the first communication port (141) is in communication with the fourth communication port (144) through the second channel chamber (1114), and the second communication port (142) is disconnected from the third communication port (143);
when the four-way valve is in the second state, the first communication port (141) is in communication with the second communication port (142) through the first channel chamber (1112), and the third communication port (143) is in communication with the fourth communication port (144) through the second channel chamber (1114);
when the four-way valve is in the third state, the first communication port (141), the third communication port (143) and the fourth communication port (144) are in communication through the second channel chamber (1114), and the second communication port (142) is disconnected;
when the four-way valve is in the fourth state, the third communication port (143) is in communication with the fourth communication port (144) through the second channel chamber (1114), and the first communication port (141) is disconnected from the second communication port (142); and
when the four-way valve is in the fifth state, the first communication port (141) is in communication with the fourth communication port (144) through the second channel chamber (1114), and the second communication port (142) is in communication with the third communication port (143) through the first channel chamber (1112).

13. The four-way valve according to Claim 12, **characterized in that**
the four-way valve is configured as: when the four-way valve is in the second state, the valve body (154) can rotate between a second state first position and a second state second position, and in the process of rotation between the second state first position and the second state second position, a value range of opening degrees/an opening degree of the first communication port (141) and/or the second communication port (142) is realized to be: ϕ∈(0%, 100%].

14. The four-way valve according to Claim 13, **characterized in that**
the opening degree of the first communication port (141) is related to an overlapping area of the valve body (154) and the first communication port (141).

15. The four-way valve according to Claim 12, **characterized in that**
the four-way valve is configured as: when the four-way valve is in the third state, the valve body (154) can rotate between a third state first position and a third state second position, and in the process of rotation between the third state first position and the third state second position, it is realized that an opening degree of the third communication port (143) decreases when the opening degree of the first communication port (141) increases, and the opening degree of the third communication port (143) increases when the opening degree of the first communication port (141) decreases.

16. The four-way valve according to Claim 15, **characterized in that**
the opening degree of the first communication port (141) is related to the overlapping area of the valve body (154) and the first communication port (141), and the opening degree of the third communication port (143) is related to an overlapping area of the valve body (154) and the third communication port (143).
